# EUROPÄISCHE PATENTSCHRIFT

(11) **EP 2 468 558 B1**
(45) Veröffentlichungstag und Bekanntmachung des Hinweises auf die Patenterteilung: **24.07.2013**
(21) Anmeldenummer: 11009834.0
(22) Anmeldetag: 14.12.2011
(51) Int. Cl.: B60K 37/04

(54) **Kraftstoffsystem**
Fuel system
Système de carburant

(30) Priorität: 21.12.2010 DE 102010055320
(43) Veröffentlichungstag der Anmeldung: 27.06.2012
(73) Patentinhaber: Audi AG, 85045 Ingolstadt (DE)
(72) Erfinder: Hagen, Harald, 95473 Creussen (DE)
(74) Vertreter: Lehle, Josef

(56) Entgegenhaltungen:
- WO-A1-2006/041400
- US-A- 3 942 499

## Beschreibung

Die Erfindung betrifft ein Kraftstoffsystem, insbesondere eines Kraftfahrzeugs, mit einem Kraftstofftank und einer Entlüftungseinrichtung zur Entlüftung des Kraftstofftanks, wobei die Entlüftungseinrichtung über zumindest eine einen Zwischenspeicher für flüssigen Kraftstoff aufweisende Abscheidevorrichtung verfügt.

Kraftstoffsysteme der eingangs genannten Art sind aus dem Stand der Technik bekannt. Sie sind beispielsweise einem Kraftfahrzeug beziehungsweise einem Antriebssystem des Kraftfahrzeugs zugeordnet. Das Antriebssystem verfügt dabei insbesondere über zumindest eine Brennkraftmaschine und ist beispielsweise als Hybridantriebssystem ausgebildet, weist also die Brennkraftmaschine sowie zumindest eine elektrische Maschine auf, wobei die Brennkraftmaschine und die elektrische Maschine ein Antriebsmoment des Antriebssystems zumindest zeitweise gemeinsam erzeugen. Der Brennkraftmaschine wird von dem Kraftstoffsystem Kraftstoff aus dem Kraftstofftank zugeführt. Häufig wird als Kraftstoff ein flüchtiger Kohlenwasserstoffkraftstoff, beispielsweise Benzin, verwendet. Der Kraftstofftank enthält daher normalerweise sowohl ein Volumen an flüssigem Kraftstoff als auch ein Volumen an gasförmigem Kraftstoff, welches insbesondere oberhalb des flüssigen Kraftstoffs anfällt. Der Kraftstofftank kann ein geschlossener Tank, insbesondere ein Drucktank, oder ein teilgeschlossener, insbesondere auch druckloser, Tank sein. Der geschlossene Tank wird insbesondere zur Reduzierung von Emissionen verwendet.

Bedingt durch Schwankungen der Temperatur des Kraftstoffs, beispielsweise verursacht durch Veränderungen der Umgebungstemperatur, können Druckschwankungen in dem Kraftstofftank auftreten. Aus diesem Grund ist die Entlüftungseinrichtung dem Kraftstofftank zugeordnet. Sie dient der Entlüftung des Kraftstofftanks. Auf diese Weise kann ein zu hoher Druck in dem Kraftstofftank durch die Entlüftungseinrichtung reduziert werden. Zu diesem Zweck entlüftet die Entlüftungseinrichtung den Kraftstofftank beispielsweise durch eine Entlüftungsleitung. Bei dem Entlüften kann durch die Entlüftungseinrichtung beziehungsweise die Entlüftungsleitung sowohl gasförmiger als auch flüssiger Kraftstoff aus dem Kraftstofftank heraus gelangen. Der entlüftete Kraftstoff liegt also zunächst als Gemisch aus gasförmigem und flüssigem Kraftstoff vor. Dies ist insbesondere dann der Fall, wenn das Entlüften des Kraftstofftanks bei hohem Kraftstofftankinnendruck durchgeführt wird. Dabei liegen, bedingt durch den hohen Druck beziehungsweise die große Druckdifferenz zwischen Kraftstofftankinnendruck und dem Druck außerhalb des Kraftstofftanks hohe Strömungsgeschwindigkeiten des entlüfteten Kraftstoffs vor, wodurch flüssiger Kraftstoff von dem gasförmigen Kraftstoff mitgerissen wird.

Der gasförmige Kraftstoff darf ohne weiteres der Brennkraftmaschine beziehungsweise deren Ansaugsystem zugeführt werden, wobei zwischen dem Kraftstofftank und der Brennkraftmaschine ein der Entlüftungseinrichtung zugeordneter Kraftstoffspeicher, welcher bevorzugt als Aktivkohlespeicher ausgebildet ist, angeordnet sein kann. Der Kraftstoffspeicher dient dazu, gasförmigen Kraftstoff zwischenzuspeichern, also aufzunehmen, wenn nicht benötigter gasförmiger Kraftstoff vorliegt und abzugeben, sobald der gasförmige Kraftstoff in die Brennkraftmaschine abgeführt werden kann. Es darf jedoch kein flüssiger Kraftstoff in den Kraftstoffspeicher beziehungsweise die Brennkraftmaschine gelangen.

Aus diesem Grund weist die Entlüftungseinrichtung die zumindest eine Abscheidevorrichtung auf, welche zur Trennung von gasförmigem und flüssigem Kraftstoff dient. Die Abscheidevorrichtung ist demnach dazu vorgesehen, das Überführen von flüssigem Kraftstoff von dem Kraftstofftank durch die Entlüftungseinrichtung in die Brennkraftmaschine beziehungsweise den Kraftstoffspeicher zu verhindern. Dabei scheidet die Abscheidevorrichtung flüssigen Kraftstoff ab und lässt gasförmigen Kraftstoff passieren. Der abgeschiedene flüssige Kraftstoff gelangt in den Zwischenspeicher der Abscheidevorrichtung. Der Begriff Zwischenspeicher bedeutet dabei nicht, dass tatsächlich eine (Zwischen-) Speicherung des flüssigen Kraftstoffs vorgesehen ist. Vielmehr kann der flüssige Kraftstoff unmittelbar aus dem Zwischenspeicher beziehungsweise der Abscheidevorrichtung abgeführt werden, bevorzugt in Richtung des Kraftstofftanks. Dabei kann sich jedoch, beispielsweise durch eine Begrenzung des Abführvolumenstroms, insbesondere durch einen Leitungsquerschnitt oder dergleichen, ein Anstieg des Füllstands des Zwischenspeichers ergeben. Der abgeschiedene flüssige Kraftstoff kann demnach zumindest zeitweise nicht so schnell abgeführt werden, wie er in den Zwischenspeicher eingebracht wird. Selbstverständlich ist auch eine Zwischenspeicherung des flüssigen Kraftstoffs, beispielsweise über eine bestimmte Zeitspanne, realisierbar.

Beim Betreiben des Kraftstoffsystems sollte verhindert werden, dass die sich in dem Zwischenspeicher beziehungsweise der Abscheidevorrichtung befindliche Menge des flüssigen Kraftstoffs eine Grenzmenge überschreitet, der Füllstand des Zwischenspeichers demnach größer als ein Grenzfüllstand wird, weil dies die Wirksamkeit der Abscheidevorrichtung beeinträchtigen kann. Je größer die Menge flüssigen Kraftstoffs in dem Zwischenspeicher ist, umso größer wird das Risiko, dass zusammen mit dem gasförmigen Kraftstoff auch flüssiger Kraftstoff wieder aus der Abscheidevorrichtung heraus gelangt und in Richtung des Kraftstoffspeichers beziehungsweise der Brennkraftmaschine mitgenommen wird. Aus diesem Grund kann der Abscheidevorrichtung die Kraftstofffördereinrichtung zugeordnet werden. Diese wird dazu eingesetzt, flüssigen Kraftstoff aus dem Zwischenspeicher zu fördern, insbesondere in Richtung des Kraftstofftanks. Die Kraftstofffördereinrichtung ist dabei üblicherweise als Saugstrahlpumpe ausgebildet, wobei als Betriebsmittel der Saugstrahlpumpe häufig Kraftstoff verwendet wird, welcher von einer Kraftstoffpumpe des Kraftstoffsystems aus dem Kraftstofftank in Richtung der Brennkraftmaschine gefördert wird. Insbesondere wenn ein großer Volumenstrom an flüssigem Kraftstoff in die Entlüftungseinrichtung beziehungsweise die Abscheidevorrichtung gelangt, kann es jedoch bei aus dem Stand der Technik bekannten Kraftstoffsystemen vorkommen, dass zumindest ein Teil des flüssigen Kraftstoffs zusammen mit dem gasförmigen Kraftstoff auch wieder aus der Abscheidevorrichtung heraus gelangt.

Aus dem Stand der Technik ist beispielsweise die gattungsbildende WO 2006/041400 A1 bekannt. Diese zeigt eine Belüftungseinrichtung für einen Kraftstofftank. Die Belüftungseinrichtung verfügt über einen Behälter, mittels welchem Kraftstoff aufgefangen wird, welcher über Ventile abgeführt wird. In dem Behälter sind Querwände vorgesehen, die von unterschiedlichen Seiten des Behälters ausgehen, sodass sie miteinander überlappen. Als Alternative wird der Einsatz von Stahlwolle oder dünnen Filtern zur Tropfenabscheidung gekannt.

Es ist nun Aufgabe der Erfindung, ein Kraftstoffsystem vorzuschlagen, weiche über eine Abscheidevorrichtung mit verbesserter Abscheidewirkung, insbesondere auch bei einem erhöhten Volumenstrom an flüssigem Kraftstoff, verfügt.

Dies wird erfindungsgemäß erreicht, indem die Abscheidevorrichtung zumindest bereichsweise aus einem porösen Material besteht und/oder mit diesem gefüllt ist. Das poröse Material ist dabei vorzugsweise derart in der Abscheidevorrichtung angeordnet, dass es von dem in die Abscheidevorrichtung eingebrachten Kraftstoff, insbesondere dem flüssigen Kraftstoff, durchströmt oder zumindest angeströmt wird. Unter dem porösen Material ist dabei ein Material zu verstehen, welches eine Vielzahl von Ausnehmungen aufweist beziehungsweise einschließt, welche zumindest teilweise miteinander in Strömungsverbindung stehen können. Die Ausnehmungen können jedoch alternativ auch strömungstechnisch vollständig voneinander getrennt vorliegen. Das poröse Material weist dabei eine Filterwirkung auf, welche den flüssigen Kraftstoff zurückhält oder zumindest verzögert, also seine Strömungsgeschwindigkeit verringert, während der gasförmige Kraftstoff das poröse Material im Wesentlichen ungehindert oder lediglich mit geringfügiger Verzögerung passieren kann. Der flüssige Kraftstoff bleibt entweder an dem porösen Material selbst hängen oder wird aufgrund der reduzierten Strömungsgeschwindigkeit aus dem strömenden Kraftstoff abgeschieden. In letzterem Fall sinkt der flüssige Kraftstoff insbesondere aufgrund von Schwerkrafteinfluss nach unten und setzt sich in dem Zwischenspeicher ab. Der an dem porösen Material oder in dem Zwischenspeicher anfallende flüssige Kraftstoff kann anschließend abgeführt werden, beispielbeispielsweise in Richtung des Kraftstofftanks. Mittels des porösen Materials kann die Abscheidewirkung der Abscheidevorrichtung deutlich verbessert werden. Zudem wird der Druckverlust der Abscheidevorrichtung verringert. Das poröse Material ist dabei vorzugsweise dauerbeständig gegenüber dem Kraftstoff.

Zudem ist vorgesehen, dass die Abscheidevorrichtung mehrere Kammern aufweist, welche von zumindest einer Zwischenwandung zumindest bereichsweise voneinander abgetrennt sind. Vorzugsweise liegen die Kammern in dem Zwischenspeicher vor, so dass dieser in die Kammern unterteilt ist. Die Abtrennung der Kammern voneinander liegt lediglich in räumlicher Hinsicht, nicht notwendigerweise jedoch in strömungstechnischer Hinsicht vor. Es kann also durchaus vorgesehen sein, dass die Kammern zwar in räumlicher Hinsicht vollständig mittels der Zwischenwandung voneinander abgetrennt sind, diese jedoch aus einem kraftstoffdurchlässigen Material besteht, beziehungsweise dazu ausgebildet ist, den Kraftstoff passieren zu lassen. Auf diese Weise stehen jeweils zumindest zwei der Kammern miteinander in Strömungsverbindung. Alternativ oder zusätzlich kann es auch vorgesehen sein, dass die Kammern mittels der Zwischenwandung in räumlicher Hinsicht lediglich bereichsweise voneinander abgetrennt sind. In diesem Fall kann der Kraftstoff um die Zwischenwandung herum strömen und so von einer der Kammern in eine andere beziehungsweise umgekehrt gelangen. Die Kammern können gleich groß sein, also dasselbe Volumen aufweisen, oder mit unterschiedlicher Größe ausgebildet sein. Beispielsweise kann die Kammer, welche einem Einlass der Abscheidevorrichtung zugeordnet ist, größer sein als eine benachbart zu der ersten Kammer angeordnete Kammer.

Die Erfindung sieht vor, dass die Zwischenwandung in einem Durchströmungsweg der Abscheidevorrichtung angeordnet ist. Der Durchströmungsweg der Abscheidevorrichtung ist derjenige Weg, auf welchem der Kraftstoff die Abscheidevorrichtung durchströmt beziehungsweise ohne die Zwischenwandung durchströmen würde. Die Zwischenwandung soll also derart in der Abscheidevorrichtung angeordnet sein, dass der die Abscheidevorrichtung durchströmende Kraftstoff von der Zwischenwandung umgelenkt wird und dabei auf sie aufprallt, bevorzugt senkrecht. Auf diese Weise bleiben Tropfen des flüssigen Kraftstoffs an der Zwischenwand hängen, so dass sich auf der Zwischenwandung ein Tropfenfilm bildet. Dieser Tropfenfilm nimmt nachfolgend weiteren flüssigen Kraftstoff, welcher in dem die Abscheidevorrichtung durchströmenden Kraftstoff enthalten ist, auf. Der gasförmige Kraftstoff wird hingegen von der Zwischenwandung lediglich umgelenkt und durchströmt die Abscheidevorrichtung weiter. Der Tropfenfilm wird, vorzugsweise durch Schwerkrafteinfluss, abgeführt, insbesondere in Richtung des Zwischenspeichers, in welchem der flüssige Kraftstoff aufgefangen wird.

Die Erfindung sieht zudem vor, dass die Zwischenwandung zumindest bereichsweise, insbesondere vollständig, aus dem porösen Material besteht und/oder vorzugsweise mit diesem wenigstens teilweise beschichtet ist. Mittels des porösen Materials kann die Filterwirkung der Abscheidevorrichtung beziehungsweise der Zwischenwandung weiter erhöht werden. Insbesondere wenn die Zwischenwandung zumindest bereichsweise aus dem porösen Material besteht, kann zudem der Strömungswiderstand gegenüber dem die Abscheidevorrichtung durchströmenden Kraftstoff verringert werden. Auf diese Weise wird ein geringerer Druckverlust der Abscheidevorrichtung erzielt und somit der Energiebedarf des Kraftstoffsystems verringert. Dabei besteht die Zwischenwandung vorzugsweise in Richtung ihrer kleinsten Abmessungen und/oder in Richtung des Durchströmungswegs vollständig aus dem porösen Material. Zusätzlich oder alternativ kann die Zwischenwandung eine zumindest teilweise Beschichtung aus dem porösen Material aufweisen. In diesem Fall besteht die Zwischenwandung aus einem Kern aus einem beliebigen Material, beispielsweise einem Kunststoff, auf welches das poröse Material aufgebracht ist. Es kann auch vorgesehen sein, dass die Beschichtung aus dem porösen Material derart an dem Kern angeordnet ist, dass ein Abströmweg für den flüssigen Kraftstoff zwischen dem porösen Material und dem Kern vorliegt, durch welchen an der Zwischenwandung abgeschiedener flüssiger Kraftstoff abgeführt wird. Dies ist insbesondere vorteilhaft, wenn die Ausnehmungen des porösen Materials Strömungskanäle sind, welche in Richtung des Durchströmungswegs vorliegen, mithin also senkrecht zu dem Abströmweg und dem Kern der Zwischenwandung vorliegen.

Die Erfindung sieht alternative vor, dass wenigstens ein Teilraum des Zwischenspeichers und/oder mindestens eine der Kammern, wenigstens bereichsweise mit dem porösen Material gefüllt ist. Insbesondere wenn nicht erfindungsgemäß die Abscheidevorrichtung nicht in Kammern aufgeteilt ist, liegt das poröse Material zumindest in dem Teilraum des Zwischenspeichers vor. Der Zwischenspeicher wird dabei zum Abscheiden des flüssigen Kraftstoffs aus dem in die Ablagevorrichtung eingebrachten Kraftstoff von Letzterem durchströmt. Zusätzlich oder alternativ kann wenigstens eine der Kammern mit dem porösen Material gefüllt sein. Das bedeutet, dass mittels des porösen Materials aus dem den Zwischenspeicher beziehungsweise die eine der Kammern durchströmenden Kraftstoff flüssiger Kraftstoff wirkungsvoll ausgeschieden wird.

Eine Weiterbildung der Erfindung sieht vor, dass ein in den Zwischenspeicher mündender Einlass der Abscheidevorrichtung einen Diffusor mit sich in Richtung des Zwischenspeichers vergrößerndem Querschnitt aufweist. Der Querschnitt vergrößert sich in Strömungsrichtung, der in die Abscheidevorrichtung eingebrachte Kraftstoff wird also in dem Diffusor bedingt durch den sich vergrößerndem Querschnitt verzögert. Vorzugsweise weist der Diffusor dabei einen kreisförmigen Querschnitt auf. Bedingt durch die verringerte Geschwindigkeit, mit welcher der Kraftstoff in die Abscheidevorrichtung gelangt, wird dessen Querschnitt effektiver zum Abscheiden des flüssigen Kraftstoffs ausgenutzt. Insbesondere kann auf diese Weise auch eine Verringerung des Strömungswiderstand und damit des Druckverlusts des Kraftstoffs beim Durchströmen der Abscheidevorrichtung erzielt werden. Zusätzlich verringert die verringerte Geschwindigkeit die Gefahr, dass gasförmiger Kraftstoff flüssigen Kraftstoff nach dessen Abscheiden wieder mitreißt.

Eine Weiterbildung der Erfindung sieht vor, dass der Diffusor zumindest bereichsweise das poröse Material aufweist und/oder wenigstens teilweise mit diesem gefüllt ist. Somit kann bereits in dem Diffusor flüssiger Kraftstoff aus dem Kraftstoff mit hoher Abscheidewirkung abgeschieden werden. Der Diffusor kann dabei derart ausgebildet sein, dass in dem Diffusor abgeschiedener flüssiger Kraftstoff unmittelbar in den Zwischenspeicher gelangt.

Eine Weiterbildung der Erfindung sieht vor, dass das poröse Material schwammartig oder filterartig, insbesondere ein Vlies, ist. Unter schwammartig ist dabei zu verstehen, dass das Material eine Vielzahl von zueinander versetzt angeordneten Hohlräumen aufweist, welche zumindest teilweise miteinander in Strömungsverbindung stehen. Ist das poröse Material filterartig, so ist es von mehreren Strömungskanälen durchsetzt, welche nicht miteinander in Strömungsverbindung stehen. Der Kraftstoff kann dabei durch die Strömungskanäle von einer Seite des porösen Materials auf die andere strömen, wobei bedingt durch den Querschnitt der Strömungskanäle das poröse Material als Sieb wirkt. Dabei kann der flüssige Kraftstoff das poröse Material schlechter durchströmen als der gasförmige Kraftstoff. Beispielsweise ist das poröse Material ein Vlies, also ein textiles Flächengebilde aus einzelnen, ungeordneten Fasern. Alternativ kann das poröse Material selbstverständlich auch als Gewebe, Gestrick oder Gewirke beziehungsweise als Membran vorliegen.

Eine Weiterbildung der Erfindung sieht mindestens ein der Abscheidevorrichtung strömungstechnisch vorgeschaltetes oder nachgeschaltetes Entlüftungsventil zur Entlüftung des Kraftstofftanks durch die Abscheidevorrichtung vor. Das Entlüftungsventil ist dabei der Entlüftungseinrichtung zugeordnet. Das Entlüftungsventil kann derart eingestellt werden, dass es zur Entlüftung des Kraftstofftanks öffnet oder zur Unterbrechung der Entlüftung schließt. Es liegt beispielsweise als FTIV (Fuel Tank Isolation Valve) vor. Das Entlüftungsventil kann als Taktventil ausgebildet sein, welches ein Einstellen von diskreten Schaltzuständen (geöffnet und geschlossen) erlaubt. Besonders bevorzugt ist das Entlüftungsventil als Stetigventil ausgelegt, welches nicht lediglich die diskreten Schaltzustände zulässt, sondern ein Einstellen des Durchströmungsquerschnitts in mehreren Stufen, besonders bevorzugt ein stetiges Einstellen, ermöglicht. Auf diese Weise ist der Volumenstrom durch die Abscheidevorrichtung, insbesondere stetig, gesteuert und/oder geregelt einstellbar. Das Entlüftungsventil ist der Abscheidevorrichtung strömungstechnisch vorgeschaltet oder nachgeschaltet, der Kraftstoff muss demnach für ein Durchströmen der Abscheidevorrichtung stets auch das Entlüftungsventil passieren. Das Entlüftungsventil kann mit der Abscheidevorrichtung oder der Kraftstofffördereinrichtung integriert sein. Das Entlüftungsventil kann also modular in die Kraftstofffördereinrichtung integriert vorliegen.

Eine Weiterbildung der Erfindung sieht vor, dass der Abscheidevorrichtung zumindest ein in Abhängigkeit des Kraftstofftankfüllstands schaltendes Belüftungsventil und/oder zumindest ein dem Kraftstofftank zugeordnetes Sicherheitsventil strömungstechnisch vorgeschaltet sind. Das Belüftungsventil ist insbesondere als FLVV (Fill Limit Venting Valve) ausgebildet. Ein solches ermöglicht ein Belüften des Kraftstofftanks, solange der Kraftstofftankfüllstand kleiner ist als ein bestimmter Kraftstofftankfüllstand, insbesondere Kraftstofftankmaximalfüllstand. Über das Belüftungsventil wird somit das Belüften des Kraftstofftanks, insbesondere bei einem Zuführen von Kraftstoff in den Kraftstofftank, sichergestellt. Zusätzlich oder alternativ kann das Sicherheitsventil vorgesehen sein, welches beispielsweise als Überroll-Sicherheitsventil beziehungsweise ROV (Roll Over Valve) ausgebildet ist. Sowohl das Belüftungsventil als auch das Sicherheitsventil sind üblicherweise dem Kraftstofftank zugeordnet und der Abscheidevorrichtung strömungstechnisch vorgeschaltet, so dass der Kraftstoff zunächst das Belüftungsventil beziehungsweise das Sicherheitsventil durchläuft, bevor es in die Abscheidevorrichtung gelangt.

Die Erfindung betrifft auch ein Antriebssystem mit einem Kraftstoffsystem gemäß den vorstehenden Ausführungen. Das Antriebssystem verfügt dabei insbesondere über zumindest eine Brennkraftmaschine und ist beispielsweise als Hybridantriebssystem ausgebildet.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: eine schematische Darstellung eines Kraftstoffsystems mit einer Abscheidevorrichtung,
- Figur 2: die Abscheidevorrichtung in einer ersten Ausführungsform,
- Figur 3: die Abscheidevorrichtung in einer zweiten Ausführungsform, und
- Figur 4: die Abscheidevorrichtung in einer dritten Ausführungsform.

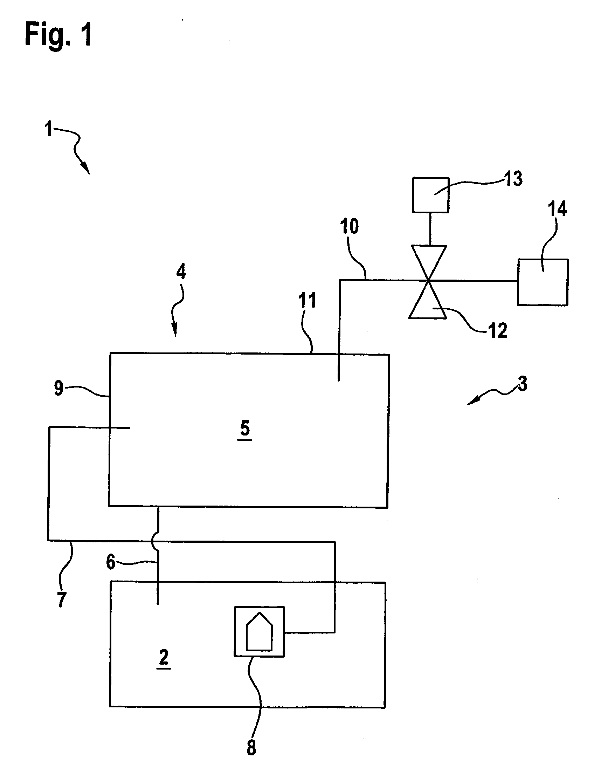

Die Figur 1 zeigt eine schematische Darstellung eines Kraftstoffsystems 1. Das Kraftstoffsystem 1 ist beispielsweise Bestandteil eines Kraftfahrzeugs beziehungsweise eines Antriebssystems des Kraftfahrzeugs. Das Kraftstoffsystem 1 verfügt über einen Kraftstofftank 2 und eine Entlüftungseinrichtung 3 zur Entlüftung des Kraftstofftanks 1. Die Entlüftungseinrichtung 3 weist eine Abscheidevorrichtung 4 mit einem Zwischenspeicher 5 auf. Die Abscheidevorrichtung 4 dient dazu, flüssigen Kraftstoff aus einem Gemisch von flüssigem und gasförmigem Kraftstoff abzuscheiden. Der abgeschiedene flüssige Kraftstoff liegt anschließend in dem Zwischenspeicher 5 vor und kann, beispielsweise durch eine Rückführungsleitung 6, wieder dem Kraftstofftank 2 zugeführt werden. Die Rückführungsleitung 6 weist bevorzugt ein Ventil, insbesondere Drainageventil beziehungsweise Rückschlagventil, auf. Anstelle der Rückführungsleitung 6 kann auch lediglich das Ventil vorgesehen sein, insbesondere wenn die Abscheidevorrichtung 4 zumindest bereichsweise in dem Kraftstofftank 2 vorliegt, so dass durch das Ventil aus dem Zwischenspeicher 5 austretender Kraftstoff unmittelbar in den Kraftstofftank gelangt. Das Ventil ist derart ausgebildet, dass Kraftstoff durch die Rückführungsleitung 6 lediglich aus dem Zwischenspeicher 5 herausgelangen, nicht jedoch in ihn hineingelangen kann. Somit wird verhindert, dass durch die Rückführungsleitung 6 Kraftstoff aus dem Kraftstofftank 2 in den Zwischenspeicher 5 gelangt.

Die Entlüftungseinrichtung 3 steht über eine Entlüftungsleitung 7 in Strömungsverbindung mit dem Kraftstofftank 2. Auf der dem Kraftstofftank 2 zugewandten Seite der Entlüftungsleitung 7 beziehungsweise in dem Kraftstofftank 2 ist dabei ein Belüftungsventil 8 vorgesehen, welches in Abhängigkeit des Kraftstofftankfüllstands schaltet. Üblicherweise ist das Belüftungsventil 8 derart ausgeführt, dass es nur bei einem Kraftstofftankfüllstand unterhalb eines bestimmten Kraftstofftankfüllstands, insbesondere eines Maximalkraftstofftankfüllstands, geöffnet ist, also Kraftstoff, insbesondere gasförmiger Kraftstoff, aus dem Kraftstofftank in die Entlüftungsleitung 7 gelangen kann. Die Entlüftungsleitung 7 mündet in den Zwischenspeicher 5 der Abscheidevorrichtung 4 ein, bevorzugt durch eine Seitenwand 9 oder einen Boden des Zwischenspeichers 5. Beabstandet von der Entlüftungsleitung 7 beziehungsweise deren Mündungsstelle in den Zwischenspeicher 5 mündet eine Auslassleitung 10 in den Zwischenspeicher 5 ein, bevorzugt durch eine Decke 11 des Zwischenspeichers 5. Die Mündungsstelle der Auslassleitung 10 in den Zwischenspeicher 5 ist damit bevorzugt derart angeordnet, dass lediglich gasförmiger Kraftstoff aus dem Zwischenspeicher 5 in die Auslassleitung 10 gelangen kann. Dazu sind die Mündungsstellen von Auslassleitung 10 und Entlüftungsleitung 7 bevorzugt an gegenüberliegenden Seiten des Zwischenspeichers 5 angeordnet. Die Auslassleitung 10 weist ein Entlüftungsventil 12 auf, welches mittels einer Betätigungseinrichtung 13 betätigbar ist. Das Entlüftungsventil 12 und die Betätigungseinrichtung 13 sind dabei bevorzugt derart ausgebildet, dass der Durchströmungsquerschnitt des Entlüftungsventils 12 stetig einstellbar ist. Auf der der Abscheidevorrichtung 4 abgewandten Seite mündet die Auslassleitung 10 in einen Kraftstoffspeicher 14, insbesondere einen Aktivkohlespeicher, ein. Der Kraftstoffspeicher 14 dient der Zwischenspeicherung von gasförmigem Kraftstoff.

Die Abscheidevorrichtung 4 ist üblicherweise zumindest bereichsweise, insbesondere vollständig, in dem Kraftstofftank 2, angeordnet. Auch eine Anordnung außerhalb des Kraftstofftanks 2 ist jedoch möglich. Alternativ kann die Abscheidevorrichtung 4 auch in eine Leitung, beispielsweise die Entlüftungsleitung 7, integriert sein. In einer bevorzugten Ausführungsform ist die Abscheidevorrichtung derart ausgebildet, dass sie beziehungsweise die Entlüftungseinrichtung 3 einen bestimmten Druckverlust aufweist. Dieser ist dabei derart gewählt, dass bei einem Entlüften der Kraftstofftanks 2 mittels der Entlüftungseinrichtung 3 ein eventuell vorhandenes Ventil, beispielsweise das Belüftungsventil 8, nicht in dessen Geschlossenstellung gebracht wird. Das Belüftungsventil 8 weist üblicherweise einen Schwimmer auf, welcher einen Ventilsitz des Belüftungsventils 8 freigibt, solange der Kraftstofftankfüllstand kleiner als ein bestimmter Kraftstofftankfüllstand ist. Wird der mittels der Entlüftungseinrichtung 3, also durch das Belüftungsventil 8, abgeführte Volumenstrom größer als ein Auslegungsvolumenstrom, so kann der Schwimmer von dem Volumenstrom beziehungsweise dem entlüfteten Kraftstoff in den Ventilsitz, also in die Geschlossenstellung verlagert werden, so dass ein weiteres Entlüften des Kraftstofftanks 2 nicht möglich ist. Dies gilt insbesondere bei vollständig geöffnetem Entlüftungsventil 12.

Üblicherweise wird der Druckverlust der Entlüftungseinrichtung 3 durch Anpassen des Entlüftungsventils 12 eingestellt, beispielsweise durch Einbringen eines Drosselelements. Hier soll es nun bevorzugt vorgesehen sein, dass der Druckverlust der Entlüftungseinrichtung 3 durch Anpassen der Abscheidevorrichtung 4 beziehungsweise deren Druckverlust erfolgt, beispielsweise durch Vorsehen eines angepassten Drosselelements. Das Entlüftungsventil 12 weist demnach bevorzugt kein Drosselelement auf. Das Drosselelement kann jedoch selbstverständlich zusätzlich vorgesehen sein.

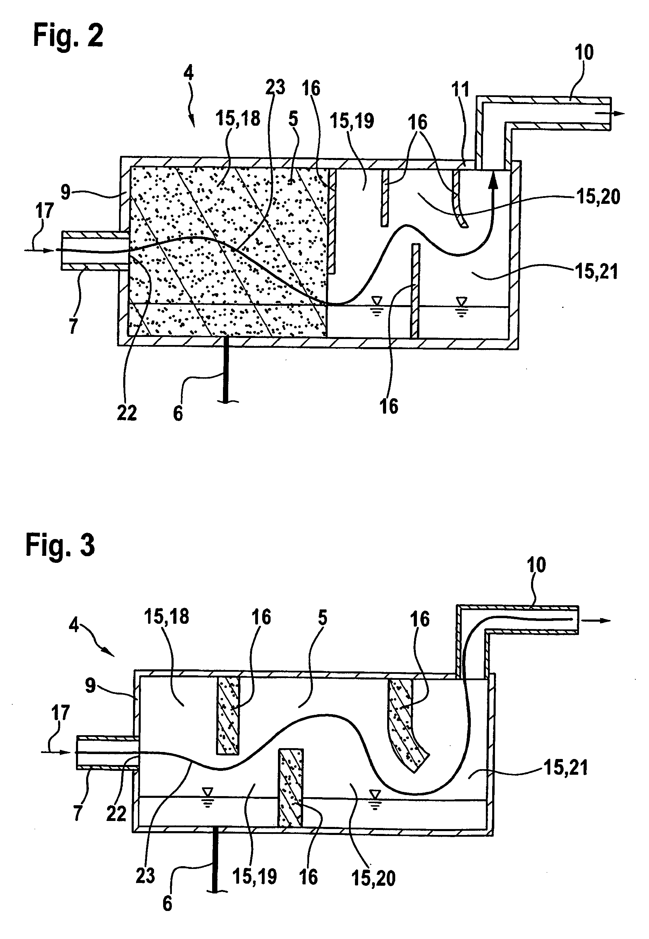

Die Figur 2 zeigt eine erste Ausführungsform der Abscheidevorrichtung 4. Die Abscheidevorrichtung 4 weist mehrere Kammern 15 auf, welche von Zwischenwandungen 16 zumindest bereichsweise voneinander abgetrennt sind. Die Zwischenwandungen 16 ragen dabei in Strömungsrichtung (Pfeil 17) - insbesondere wechselseitig - von sich gegenüberliegenden Seiten in den Zwischenspeicher 5 hinein, so dass dieser in die Kammern 15 unterteilt ist. In dem vorliegenden Fall sind vier Kammern 15 vorgesehen, so dass eine erste Kammer 18, eine zweite Kammer 19, eine dritte Kammer 20 und eine vierte Kammer 21 vorliegen. Prinzipiell kann jedoch eine beliebige Anzahl an Kammern 15 in dem Zwischenspeicher 5 vorgesehen sein. In der hier dargestellten Ausführungsform ist die erste Kammer 18 vollständig mit einem porösen Material gefüllt. Der Kraftstoff, welcher durch einen Einlass 22 in die Abscheidevorrichtung 4 beziehungsweise den Zwischenspeicher 5 gelangt, durchströmt demnach das in der ersten Kammer 18 angeordnete poröse Material, um in die in Strömungsrichtung nachfolgenden Kammern 19, 20 und 21 zu gelangen.

Bedingt durch die schwammartige oder filterartige Ausbildung des porösen Materials, wird in diesem zumindest ein Teil des flüssigen Kraftstoffs aus dem in die Abscheidevorrichtung 4 einströmenden Kraftstoff beziehungsweise Kraftstoffgemisch abgeschieden. Der flüssige Kraftstoff liegt üblicherweise in Tropfenform in dem gasförmigen Kraftstoff vor. Die Tropfen aus flüssigem Kraftstoff setzen sich nun auf beziehungsweise an dem porösen Material ab und können nachfolgen, beispielsweise aufgrund von Schwerkrafteinfluss, abgeführt werden. Der somit abgeschiedene flüssige Kraftstoff kann in dem Zwischenspeicher 5 zumindest zeitweise zwischengespeichert werden oder unmittelbar durch die Rückführungsleitung 6 aus diesem ausgebracht werden, vorzugsweise in Richtung des Kraftstofftanks 2. Die Verwendung des porösen Materials verbessert nicht nur die Abscheidewirkung der Abscheidevorrichtung 4, sondern verringert auch deren Druckverlust.

Die Zwischenwandungen 16 sind in einem Durchströmungsweg 23 der Abscheidevorrichtung 4 beziehungsweise des Zwischenspeichers 5 angeordnet. Das bedeutet, dass durch die Zwischenwandungen 16 jeweils eine Umlenkung des die Abscheidevorrichtung 4 durchströmenden Kraftstoffs erzielt wird. Durch dieses Umlenken wird wiederum flüssiger Kraftstoff aus dem Kraftstoff abgeschieden und in den Zwischenspeicher 5 eingebracht. Idealerweise wird in der Abscheidevorrichtung 4 jeglicher in dem Kraftstoff befindliche flüssige Kraftstoff abgeschieden, so dass in der Auslassleitung 10 lediglich gasförmiger Kraftstoff vorliegt.

Die Figur 3 zeigt eine zweite Ausführungsform der Abscheidevorrichtung 4. Bei dieser Ausführungsform sind die Zwischenwandungen 16 wieder in dem Durchströmungsweg 23 angeordnet, es wird also jeweils eine Richtungsänderung des die Abscheidevorrichtung 4 durchströmenden Kraftstoffs erzielt. Die Zwischenwandungen 16 bestehen dabei aus dem porösen Material beziehungsweise sind mit diesem beschichtet. Beim Durchströmen der Abscheidevorrichtung 4 gerät der Kraftstoff demnach in Kontakt mit den Zwischenwandungen 16 und damit mit dem porösen Material. Auf diese Weise wird die Abscheidewirkung der Abscheidevorrichtung 4 deutlich erhöht.

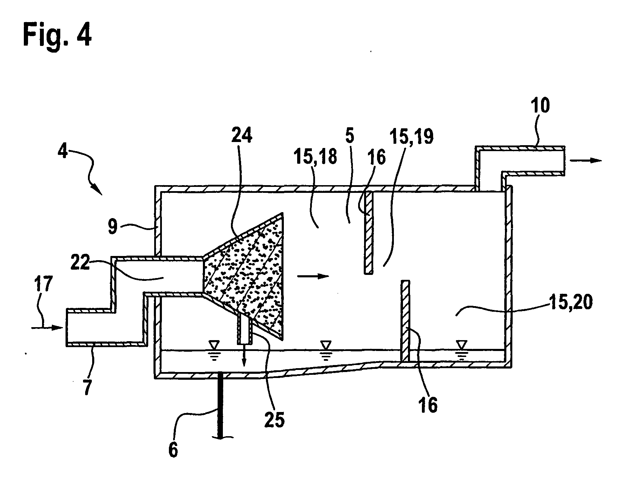

Die Figur 4 zeigt eine dritte Ausführungsform der Abscheidevorrichtung 4. Bei dieser weist der Einlass 22 einen Diffusor 24 auf, wobei sich der Querschnitt des Diffusors 24 in Richtung des Zwischenspeichers 5 vergrößert. Der in die Abscheidevorrichtung 4 einströmende Kraftstoff wird demnach zunächst verzögert, bevor er in die erste Kammer 18 eintritt. Dabei kann es vorgesehen sein, dass der Diffusor 24 zumindest bereichsweise das poröse Material aufweist beziehungsweise wenigstens teilweise mit diesem gefüllt ist. Besonders bevorzugt ist ein Ablauf 25 an dem Diffusor 24 vorgesehen, so dass in dem Diffusor 24 anfallender flüssiger Kraftstoff aus diesem heraus und in den Zwischenspeicher 5 gelangen kann. Auch in der hier dargestellten Ausführungsform ist der Zwischenspeicher 5 mittels Zwischenwandungen 16 den Kammern 15 unterteilt, wobei hier lediglich die erste Kammer 18, die zweite Kammer 19 und die dritte Kammer 20 vorliegen. Selbstverständlich können auch bei dieser Ausführungsform eine beliebige Anzahl Zwischenwandungen 16 und Kammern 15 vorgesehen sein.

Zumindest den Ausführungsformen der Figuren 2 und 3 ist gemeinsam, dass die zu der Auslassleitung 10 benachbarte Zwischenwandung 16 in Richtung der Auslassleitung 10 beziehungsweise deren Mündungsstelle in den Zwischenspeicher 5 gekrümmt ist. Das freie Ende der Zwischenwandung 16 ist dabei in Richtung der Auslassleitung 10 verlagert, so dass insoweit eine zumindest teilweise Abdeckung der Mündungsstelle gegeben ist. Selbstredend kann eine solche Ausführung der Zwischenwandung 16 auch für die dritte Ausführungsform der Figur 4 vorgesehen sein.

### BEZUGSZEICHENLISTE

- 1: Kraftstoffsystem
- 2: Kraftstofftank
- 3: Entlüftungseinrichtung
- 4: Abscheidevorrichtung
- 5: Zwischenspeicher
- 6: Rückführungsleitung
- 7: Entlüftungsleitung
- 8: Belüftungsventil
- 9: Seitenwand
- 10: Auslassleitung
- 11: Decke
- 12: Entlüftungsventil
- 13: Betätigungseinrichtung
- 14: Kraftstoffspeicher
- 15: Kammer
- 16: Zwischenwandung
- 17: Pfeil
- 18: Erste Kammer
- 19: Zweite Kammer
- 20: Dritte Kammer
- 21: Vierte Kammer
- 22: Einlass
- 23: Durchströmungsweg
- 24: Diffusor
- 25: Ablauf

## Patentansprüche

1. Kraftstoffsystem (1), insbesondere eines Kraftfahrzeugs, mit einem Kraftstofftank (2) und einer Entlüftungseinrichtung (3) zur Entlüftung des Kraftstofftanks (2), wobei die Entlüftungseinrichtung (3) über zumindest eine einen Zwischenspeicher (5) für flüssigen Kraftstoff aufweisende Abscheidevorrichtung (4) verfügt, wobei die Abscheidevorrichtung (4) mehrere Kammern (15,18,19,20,21) aufweist, welche von zumindest einer Zwischenwandung (16) zumindest bereichsweise voneinander abgetrennt sind, wobei der die Abscheidevorrichtung (4) durchströmende Kraftstoff von der zumindest einen Zwischenwandung (16) umgelenkt wird, so dass Tropfen des flüssigen Kraftstoffs an ihr hängenbleiben, **dadurch gekennzeichnet, dass** die Abscheidevorrichtung (4) zumindest bereichsweise aus einem porösen Material besteht und/oder mit diesem gefüllt ist.

2. Kraftstoffsystem nach Anspruch 1, **dadurch gekennzeichnet, dass** die Zwischenwandung (16) in einem Durchströmungsweg (23) der Abscheidevorrichtung (4) angeordnet ist.

3. Kraftstoffsystem nach einem der vorhergehenden Ansprüche, **dadurch gekennzeichnet, dass** die Zwischenwandung (16) zumindest bereichsweise, insbesondere vollständig, aus dem porösen Material besteht und/oder mit diesem wenigstens teilweise beschichtet ist.

4. Kraftstoffsystem nach einem der vorhergehenden Ansprüche, **dadurch gekennzeichnet, dass** wenigstens ein Teilraum des Zwischenspeichers (5) und/oder mindestens eine der Kammern (15,18,19,20,21) wenigstens bereichsweise mit dem porösen Material gefüllt ist.

5. Kraftstoffsystem nach einem der vorhergehenden Ansprüche, **dadurch gekennzeichnet, dass** ein in den Zwischenspeicher (5) mündender Einlass (23) der Abscheidevorrichtung (4) einen Diffusor (24) mit sich in Richtung des Zwischenspeichers (5) vergrößerndem Querschnitt aufweist.

6. Kraftstoffsystem nach einem der vorhergehenden Ansprüche, **dadurch gekennzeichnet, dass** der Diffusor (24) zumindest bereichsweise das poröse Material aufweist und/oder wenigstens teilweise mit diesem gefüllt ist.

7. Kraftstoffsystem nach einem der vorhergehenden Ansprüche, **dadurch gekennzeichnet, dass** das poröse Material schwammartig oder filterartig, insbesondere ein Vlies, ist.

8. Kraftstoffsystem nach einem der vorhergehenden Ansprüche, **gekennzeichnet durch** mindestens ein der Abscheidevorrichtung (4) strömungstechnisch vorgeschaltetes oder nachgeschaltetes Entlüftungsventil (12) zur Entlüftung des Kraftstofftanks (2) **durch** die Abscheidevorrichtung (4).

9. Kraftstoffsystem nach einem der vorhergehenden Ansprüche, **dadurch gekennzeichnet, dass** der Abscheidevorrichtung (4) zumindest ein in Abhängigkeit des Kraftstofftankfüllstands schaltendes Belüftungsventil (8) und/oder zumindest ein dem Kraftstofftank zugeordnetes Sicherheitsventil strömungstechnisch vorgeschaltet sind.

## Claims

1. Fuel system (1), in particular of a motor vehicle, comprising a fuel tank (2) and a ventilation device (3) for ventilating the fuel tank (2), said ventilation device (3) having at least one separation device (4) having a temporary accumulator (5) for liquid fuel, said separation device (4) having a plurality of chambers (15, 18, 19, 20, 21) which are separated from one another, at least in regions, by at least one partitioning wall (16), the fuel flowing through the separation device (4) being redirected by the at least one partitioning wall (16) such that drops of the liquid fuel become stuck thereon, **characterised in that** the separation device (4) consists, at least in regions, of a porous material and/or is filled therewith.

2. Fuel system according to claim 1, **characterised in that** the partitioning wall (16) is arranged in a flow path (23) of the separation device (4).

3. Fuel system according to either of the preceding claims, **characterised in that** the partitioning wall (16) consists, at least in regions, in particular in its entirety, of the porous material and/or is coated, at least in part, with the porous material.

4. Fuel system according to any of the preceding claims, **characterised in that** a sub-space of the temporary accumulator (5) and/or at least one of the chambers (15, 18, 19, 20, 21) is filled with the porous material, at least in regions.

5. Fuel system according to any of the preceding claims, **characterised in that** an inlet (23) of the separation device (4), which inlet opens into the temporary accumulator (5), comprises a diffuser (24) having a cross section which increases in the direction of the temporary accumulator (5).

6. Fuel system according to any of the preceding claims, **characterised in that** the diffuser (24) comprises the porous material, at least in regions, and/or is filled with the porous material, at least in part.

7. Fuel system according to any of the preceding claims, **characterised in that** the porous material is spongy or filter-like, in particular a non-woven material.

8. Fuel system according to any of the preceding claims, **characterised by** at least one ventilation valve (12) arranged upstream or downstream of the separation device (4) in terms of flow for ventilating the fuel tank (2) by means of the separation device (4).

9. Fuel system according to any of the preceding claims, **characterised in that** at least one venting valve (8) switching in dependence on the fuel tank fill level and/or at least one safety valve which is assigned to the fuel tank are arranged upstream of the separation device (4) in terms of flow.

## Revendications

1. Système de carburant (1), en particulier d'un véhicule automobile, avec un réservoir de carburant (2) et un dispositif de désaération (3) pour la désaération du réservoir de carburant (2), le dispositif de désaération (3) disposant d'au moins un dispositif séparateur (4) présentant un accumulateur intermédiaire (5) de carburant liquide, le dispositif séparateur (4) présentant plusieurs chambres (15, 18, 19, 20, 21) qui sont séparées les unes des autres au moins par zones par au moins une paroi intermédiaire (16), le carburant parcourant le dispositif séparateur (4) étant dévié par la paroi intermédiaire (16) au moins au nombre de un de sorte que des gouttes du carburant liquide restent suspendues sur elle, **caractérisé en ce que** le dispositif séparateur (4) se compose au moins par zones d'un matériau poreux et/ou est rempli de ce matériau.

2. Système de carburant selon la revendication 1, **caractérisé en ce que** la paroi intermédiaire (16) est disposée dans une voie d'écoulement (23) du dispositif séparateur (4).

3. Système de carburant selon une des revendications précédentes, **caractérisé en ce que** la paroi intermédiaire (16) se compose au moins par zones, en particulier complètement, du matériau poreux et/ou est revêtue de ce matériau au moins partiellement.

4. Système de carburant selon une des revendications précédentes, **caractérisé en ce qu'**au moins un espace partiel de l'accumulateur intermédiaire (5) et/ou au moins une des chambres (15, 18, 19, 20, 21) est remplie au moins par zones du matériau poreux.

5. Système de carburant selon une des revendications précédentes, **caractérisé en ce qu'**une admission (23) du dispositif séparateur (4) débouchant dans l'accumulateur intermédiaire (5) présente un diffuseur (24) dont la section transversale augmente en direction de l'accumulateur intermédiaire (5).

6. Système de carburant selon une des revendications précédentes, **caractérisé en ce que** le diffuseur (24) présente au moins par zones le matériau poreux et/ou est rempli de ce matériau au moins partiellement.

7. Système de carburant selon une des revendications précédentes, **caractérisé en ce que** le matériau poreux est du type spongieux ou filtrant, en particulier est un non-tissé.

8. Système de carburant selon une des revendications précédentes, **caractérisé par** au moins une soupape de désaération (12) montée, en matière d'écoulement, en amont ou en aval du dispositif séparateur (4) pour la désaération du réservoir de carburant (2) par le dispositif séparateur (4).

9. Système de carburant selon une des revendications précédentes, **caractérisé en ce qu'**au moins une soupape de ventilation (8) qui s'active en fonction du niveau dans le réservoir de carburant est montée en amont du dispositif séparateur (4) et/ou au moins une soupape de sécurité affectée au réservoir de carburant est montée, en matière d'écoulement, en amont du dispositif séparateur.
